# EUROPÄISCHE PATENTSCHRIFT

(11) **EP 3 652 002 B1**
(45) Veröffentlichungstag und Bekanntmachung des Hinweises auf die Patenterteilung: **11.08.2021**
(21) Anmeldenummer: 18743718.1
(22) Anmeldetag: 12.07.2018
(51) Int. Cl.: B60G 3/14, B62D 13/04, B62D 13/06

(54) **ACHSBAUGRUPPE FÜR EIN SCHWERLASTFAHRZEUG, SCHWERLASTFAHRZEUG MIT WENIGSTENS EINER DERARTIGEN ACHSBAUGRUPPE UND HYDRAULIKANORDNUNG, INSBESONDERE ZUM VERSTELLEN EINER ALS ZYLINDER-KOLBEN-ANORDNUNG AUSGEBILDETEN VERSTELLBAREN EINHEIT**
AXLE ASSEMBLY FOR A HEAVY-GOODS VEHICLE, HEAVY-GOODS VEHICLE WITH AT LEAST ONE SUCH AXLE ASSEMBLY AND A HYDRAULIC UNIT, IN PARTICULAR FOR ADJUSTING AN ADJUSTABLE UNIT DESIGNED AS A CYLINDER-PISTON ARRANGEMENT
SOUS-ENSEMBLE ESSIEU POUR POIDS-LOURD, POIDS-LOURD ÉQUIPÉ D'AU MOINS UN TEL SOUS-ENSEMBLE ESSIEU ET ARRANGEMENT HYDRAULIQUE, NOTAMMENT DESTINÉ À POSITIONNER UNE UNITÉ POSITIONNABLE RÉALISÉE SOUS LA FORME D'UN ARRANGEMENT DE PISTON ET CYLINDRE

(30) Priorität: 14.07.2017 DE 102017212127
(43) Veröffentlichungstag der Anmeldung: 20.05.2020
(73) Patentinhaber: Goldhofer AG, 87700 Memmingen (DE)
(72) Erfinder: MAIER, Georg, 89257 Illertissen (DE); VÖLK, Martin, 89584 Ehingen (DE); STEINMAYER, Simon, 87758 Kronburg (DE); HÄFELE, Horst, 87727 Babenhausen (DE)
(74) Vertreter: Herzog, Markus
(86) Internationale Anmeldenummer: PCT/EP2018/068949
(87) Internationale Veröffentlichungsnummer: WO 2019/012045

(56) Entgegenhaltungen:
- WO-A1-02/22429
- DE-A1-102006 006 141
- DE-A1-102012 205 641
- DE-C1- 19 636 803
- DE-U1-202016 105 189
- FR-A1- 2 876 974

## Beschreibung

Die Erfindung betrifft eine Achsbaugruppe gemäß dem Oberbegriff des Anspruchs 1.

Die Erfindung betrifft ferner ein Schwerlastfahrzeug mit wenigstens einer derartigen Achsbaugruppe.

Es sei an dieser Stelle darauf hingewiesen, dass das Schwerlastfahrzeug, für das die erfindungsgemäße Achsbaugruppe konstruktiv auszulegen ist, sowohl ein motorisch angetriebenes Schwerlastfahrzeug als auch ein gezogenes Schwerlastfahrzeug sein kann, beispielsweise ein Schwerlastanhänger oder wie es im Anhang XI zur EG-Richtlinie 2007-46-EG in der Fassung vom 15.07.2011 heißt ein "Anhänger für Schwerlasttransporte", also gemäß der dort gegebenen Definition dieses Begriffs ein Fahrzeug der Klasse O4 für den Transport von unteilbaren Ladungen (beispielsweise Rotorflügel von Windkraftanlagen), die aufgrund ihrer Abmessungen Geschwindigkeits- und Verkehrsbeschränkungen unterliegen, wobei hierzu auch modulare Anhänger zählen, unabhängig von der Anzahl der Module. Ferner ist festzuhalten, dass auch bei den motorisch angetriebenen Schwerlastfahrzeugen nicht jede der Achsbaugruppen motorisch angetrieben zu sein braucht.

Darüber hinaus werden nur solche Fahrzeuge als Schwerlastfahrzeuge im Sinne der vorliegenden Erfindung angesehen, bei denen die Last, für die jede einzelne Achsbaugruppe ausgelegt zu sein hat, einen Wert von mindestens 5 t, vorzugsweise mindestens 6 t, aufweist.

Derartige Schwerlastfahrzeuge weisen in Abhängigkeit von der jeweils zu transportierenden Last häufig eine große Anzahl von Achsbaugruppen auf, was wiederum eine große Länge des Schwerlastfahrzeugs nach sich zieht. Zudem kann die Länge des Schwerlastfahrzeugs von Einsatz zu Einsatz unterschiedlich sein, beispielsweise kann sie mittels eines teleskopierbaren Mittellängsträgers oder durch Anordnung einer Ladebrücke oder dergleichen weiterer Komponenten veränderbar sein. Die große Länge erschwert es, die einzelnen Achsbaugruppen bei der Kurvenfahrt auf den jeweils optimalen Lenkdrehwinkel um die Lenkachse einzustellen.

Grundsätzlich könnte dies zwar durch eine Lenkanlage realisiert werden, bei welcher jeder Achsbaugruppe ein Lenkkrafterzeugungsgerät, beispielsweise ein pneumatisch und/oder hydraulisch betätigbares Zylinder-Kolben-Aggregat oder/und ein elektromotorisch betätigbares Kraftgerät, etwa ein Spindeltrieb, zugeordnet ist, das von einer zentralen Steuereinheit im Sinne der Einstellung der Achsbaugruppe auf den von der Steuereinheit bestimmten, jeweils optimalen Lenkwinkel betätigt wird. Derartige Lenkanlagen haben sich in der Praxis aber aufgrund ihrer hohen Anschaffungskosten nicht durchgesetzt.

Mit dem gleichen Ziel wurde in der Vergangenheit zudem bereits vorgeschlagen, reibungsgelenkte Achsbaugruppen einzusetzen, d.h. Achsbaugruppen, bei denen der Radträger um die Lenkdrehachse frei drehbar und die Raddrehachse bei Geradeausfahrt in Fahrtrichtung hinter der Lenkdrehachse angeordnet sind, so dass sich der jeweils optimale Lenkdrehwinkel aufgrund der Reibung des wenigstens eine Rads auf der Fahrbahn selbsttätig einstellt. Problematisch dabei ist jedoch, dass dem Prinzip der Reibungslenkung inhärent ist, dass sich die Achsbaugruppe bei dem Wechsel von Vorwärtsfahrt zu Rückwärtsfahrt um 180° dreht, der hierfür erforderliche Bauraum bei Schwerlastfahrzeugen jedoch nicht zur Verfügung steht. Daher mussten die reibungsgelenkten Achsen bei Rückwärtsfahrt bei einem Geradeausfahrt entsprechenden Lenkdrehwinkel blockiert werden. Dies hatte jedoch bei Kurvenfahrt ein "Radieren" des Rads auf der Fahrbahn zur Folge, was zu erhöhtem Verschleiß an den Reifen der Räder führt. Daher haben sich auch reibungsgelenkte Achsbaugruppen bei Schwerlastfahrzeugen nicht durchgesetzt.

In der Praxis werden daher üblicherweise Lenkanlagen eingesetzt, bei denen eine Mehrzahl von Lenkdrehgestellen mechanisch über ein Lenkhebelgestänge miteinander verbunden ist, wobei das Lenkhebelgestänge die Lenkwinkel von einander in Längsrichtung des Schwerlastfahrzeugs benachbarten Achsbaugruppen in Abhängigkeit von einem eingangsseitig vorgegebenen Lenkwinkel auf entsprechend angepasste Lenkwinkel einstellt. Die durch das Lenkhebelgestänge vorgegebenen Übersetzungsverhältnisse können jedoch nur für einzelne Lenksituationen optimiert sein, so dass sich in allen anderen Lenksituationen Lenkwinkel ergeben, die einen mehr oder weniger guten Kompromiss darstellen. Auch durch diese Lösung lässt es sich nicht vermeiden, dass die Reifen der Räder auf der Fahrbahn "radieren".

Die Druckschriften WO 02/22429 A1, FR 2 876 974 A1 und DE 196 36 803 C1 offenbaren jeweils eine Achsbaugruppe gemäß dem Oberbegriff des Anspruchs 1, welche bei Rückwärtsfahrt bei einem der Geradeausfahrt entsprechenden Lenkdrehwinkel blockiert wird.

Es ist Aufgabe der Erfindung, eine diesbezüglich verbesserte Achsbaugruppe bzw. ein diesbezüglich verbessertes Schwerlastfahrzeug bereitzustellen.

Diese Aufgabe wird erfindungsgemäß durch eine Achsbaugruppe nach Anspruch 1 gelöst.

Dies ermöglicht es, die erfindungsgemäße Achsbaugruppe bei Vorwärtsfahrt als reibungsgelenkte Achsbaugruppe zu betreiben, wobei die verstellbare Einheit als Dämpfungseinheit fungiert, welche, beispielsweise bei Fahrt mit hoher Geschwindigkeit, ein "Flattern" der reibungsgelenkten Achsbaugruppe in Umfangsrichtung um die Lenkdrehachse verhindert, wie man es beispielsweise von den Rädern von zu schnell geschobenen Einkaufswagen her kennt. Bei Rückwärtsfahrt wird die erfindungsgemäße Achsbaugruppe hingegen als zwangsgelenkte Achsbaugruppe betrieben, wobei die hierfür erforderliche Lenkkraft über die verstellbare Einheit in die Achsbaugruppe eingeleitet wird. Hierdurch kann das "Radieren" des wenigstens einen Rads auf der Fahrbahn bei Vorwärtsfahrt im Wesentlichen vollständig und bei Rückwärtsfahrt zumindest weitgehend vermieden werden.

Die für die Vorwärtsfahrt erforderliche Dämpfung kann beispielsweise dadurch bereitgestellt werden, dass die verstellbare Einheit zwei oder mehr relativ zueinander verstellbare Elemente umfasst, wobei wenigstens zwei dieser verstellbaren Elemente reibschlüssig aneinander anliegen, oder/und dadurch, dass die verstellbare Einheit eine Zylinder-Kolben-Anordnung mit einer Drossel aufweist. Die Dämpfungswirkung kann also sowohl mechanisch als auch fluidisch, d.h. pneumatisch oder/und hydraulisch, erzielt werden.

Gemäß einer ersten Ausführungsalternative kann die Zwangslenkung der erfindungsgemäßen Achsbaugruppe bei Rückwärtsfahrt beispielsweise in der vorstehend für das Beispiel der Vorwärtsfahrt von Schwerlastfahrzeugen erläuterten Art und Weise erfolgen, also beispielsweise dadurch, dass die relativ zueinander verstellbaren Elemente der verstellbaren Einheit in dem Rückwärtsfahrt-Betriebszustand zu einer in sich starren Einheit verbunden sind. Die verstellbare Einheit kann somit eine Art "Lenkstange" eines Lenkhebelgestänges bilden, welches die Lenkwinkel von einander in Längsrichtung des Schwerlastfahrzeugs benachbarten Achsbaugruppen in Abhängigkeit von einem eingangsseitig vorgegebenen Lenkwinkel über eine entsprechende Wahl der Lage der Anlenkpunkte an einem mit dem Drehlager der Achsbaugruppe betriebsfest verbundenen Lenkhebel auf entsprechend angepasste Lenkwinkel einstellt.

Es ist darauf hinzuweisen, dass eine betrachtete verstellbare Einheit aufgrund der Tatsache, dass die verstellbaren Einheiten bei dieser ersten Ausführungsalternative jeweils zwischen zwei benachbarten Achsbaugruppen angeordnet sind, auch zwei Achsbaugruppen zugeordnet sein kann.

Sowohl die Dämpfungsfunktion im Vorwärtsfahrt-Betriebszustand als auch die starre Anordnung im Rückwärtsfahrt-Betriebszustand können in einfacher Weise dadurch bereitgestellt werden, dass die verstellbare Einheit als Zylinder-Kolben-Anordnung ausgebildet ist. Im Vorwärtsfahrt-Betriebszustand können die Arbeitskammern der Zylinder-Kolben-Anordnung über eine Drosselstrecke miteinander verbunden werden, welche für die erforderliche Dämpfung sorgt. Im Rückwärtsfahrt-Betriebszustand kann die Zylinder-Kolben-Anordnung hingegen in einen Zustand versetzt werden, in welchem ein Austausch von Betriebsfluid zwischen den beiden Arbeitskammern nicht möglich ist.

Da es am einfachsten ist, Zylinder-Kolben-Anordnungen in einer Extremstellung zu blockieren, d.h. entweder in der maximal verlängerten Stellung oder in der maximal verkürzten Stellung, ist es bevorzugt, wenn die Zylinder-Kolben-Anordnung zwei Zylinder-Kolben-Einheiten umfasst, deren dem jeweiligen Kolbenstangenaustrittsende entgegengesetzte Enden betriebsfest miteinander verbunden sind. In diesem Fall kann die Zylinder-Kolben-Anordnung nämlich in einfacher Weise auf eine Geradeausfahrt entsprechende, mittlere Länge eingestellt werden, indem die eine Zylinder-Kolben-Einheit in die vollständig ausgefahrene Stellung und die andere Zylinder-Kolben-Einheit in die vollständig eingefahrene Stellung eingestellt wird.

Alternativ hierzu ist es jedoch auch möglich, die Zylinder-Kolben-Anordnung mechanisch in einer Stellung mittlerer Länge zu blockieren, beispielsweise unter Verwendung wenigstens eines Bolzens.

Gemäß einer zweiten Ausführungsalternative kann die Zwangslenkung der erfindungsgemäßen Achsbaugruppe bei Rückwärtsfahrt aber auch dadurch bereitgestellt werden, dass die verstellbare Einheit als Lenkkrafterzeugungseinheit ausgebildet ist. Hierzu kann die Zylinder-Kolben-Anordnung beispielsweise als Zylinder-Kolben-Aggregat ausgebildet sein, d.h. als Zylinder-Kolben-Anordnung, der, beispielsweise von einer Fluidpumpe, aktiv Betriebsfluid zugeführt wird, um die gewünschte Lenkdrehbewegung der Achsbaugruppe herbeiführen zu können.

Eine fluidisch betätigbare Lenkkrafterzeugungsvorrichtung lediglich für die Rückwärtsfahrt kann verglichen mit einer fluidisch betätigbaren Lenkkrafterzeugungsvorrichtung sowohl für die Vorwärtsfahrt als auch für die Rückwärtsfahrt kostengünstiger bereitgestellt werden, da sie die gesetzlichen Vorschriften für Lenkanlagen nicht zu erfüllen braucht, die insbesondere die zweikreisige Auslegung der Lenkanlage fordern. Diese gesetzlichen Vorschriften gelten nämlich nur für Betriebszustände mit Geschwindigkeiten von mehr als 25 km/h, während sich Schwerlastfahrzeuge bei Rückwärtsfahrt üblicherweise erheblich langsamer fortbewegen, üblicherweise mit Geschwindigkeiten von nicht mehr als 10 bis 15 km/h. Somit braucht die Lenkkrafterzeugungsvorrichtung der erfindungsgemäßen Achsbaugruppe lediglich einkreisig ausgelegt zu sein. Sie kann daher einfacher aufgebaut sein und somit kostengünstiger bereitgestellt werden als eine zweikreisige Lenkkrafterzeugungsvorrichtung, wie sie bei Schwerlastfahrzeugen des Standes der Technik zum Einsatz kommt.

In Weiterbildung der Erfindung ist es zwar grundsätzlich denkbar, dass die verstellbare Einheit in Vorwärtsfahrtrichtung hinter der Lenkdrehachse angeordnet ist. Aus Gründen des zur Verfügung stehenden Bauraums ist es jedoch bevorzugt, dass die verstellbare Einheit in Vorwärtsfahrtrichtung vor der Lenkdrehachse angeordnet ist.

Um auch Lenkwinkel von ±65° oder mehr relativ zu der Lenkstellung bei Geradeausfahrt in Vorwärtsrichtung, die einem Lenkwinkel von 0° entspricht, realisieren zu können, wird vorgeschlagen, dass das freie Ende der verstellbaren Einheit an einem Übersetzungshebel angreift, an welchem das eine Ende einer Lenkstange angelenkt ist, deren anderes Ende mit dem Drehlager verbunden ist. Diese Ausführungsform zeichnet sich durch eine besonders kompakte Bauweise aus. Alternativ hierzu kann jedoch beispielsweise auch vorgesehen sein, dass die verstellbare Einheit teleskopierbar ausgebildet ist.

Gemäß der zweiten Ausführungsalternative kann das freie Ende der verstellbaren Einheit dazu ausgelegt sein, am Rahmen des Schwerlastfahrzeugs befestigt zu werden. Es ist erfindungsgemäß jedoch auch möglich, die Konstruktionsprinzipien der beiden Ausführungsalternativen miteinander zu kombinieren, beispielsweise dadurch, dass das das freie Ende der verstellbaren Einheit dazu ausgelegt ist, mit einer benachbarten Achsbaugruppe verbunden zu werden. Auf diese Weise kann ein Teil der Lenkbewegung der erfindungsgemäßen Achsbaugruppe von dem Lenkgestänge der zwangsgelenkten Achsbaugruppe(n) abgegriffen werden, so dass die verstellbare Einheit lediglich Korrekturlenkbewegungen zu erzeugen braucht, um die erfindungsgemäße Achsbaugruppe auf den jeweils geeigneten Lenkwinkel einzustellen.

An dieser Stelle sei darauf hingewiesen, dass die erfindungsgemäße Lösung nicht auf einen bestimmten Konstruktionstyp beschränkt ist, sondern bei jeder beliebigen Art von Achsbaugruppe zur Anwendung gebracht werden kann.

Beispielsweise kann die erfindungsgemäße Lösung bei den sogenannten Pendelachsen-Achsbaugruppen eingesetzt werden. Dieser Konstruktionstyp umfasst ein mit dem Drehlager fest verbundenes Drehgestell, an dessen freiem Ende eine Schwinge um eine im Wesentlichen horizontal verlaufende Schwenkachse schwenkbar angeordnet ist, wobei der Radträger an dem freien Ende der Schwinge schwenkbar angeordnet ist.

Es ist jedoch auch möglich, die erfindungsgemäße Lösung bei achsschenkelgelenkten Achsbaugruppen einzusetzen, beispielsweise dem in der DE 10 2012 205 641 A1 der Anmelderin offenbarten Konstruktionstyp mit MacPherson-Einzelradaufhängung.

Darüber hinaus kann die erfindungsgemäße Lösung auch bei Achsbaugruppen anderer Konstruktionstypen eingesetzt werden. Beispielsweise kann sie bei einem Konstruktionstyp eingesetzt werden, bei welchem ein um eine im Wesentliche vertikale Lenkdrehachse drehbar angeordneter Radträger fest an einem freien Ende einer Schwinge der vorstehend beschriebenen Art oder an einer abweichend ausgebildeten Radaufhängung angebracht ist. Ferner kann die Erfindung auch bei abweichenden Konstruktionstypen achsschenkelgelenkter Achsbaugruppen mit Einzelradaufhängung oder auch bei solchen Konstruktionstypen eingesetzt werden, welche keinerlei Einzelradaufhängung, sondern über einen starren Achskörper miteinander verbundene lenkbare Räder aufweisen.

Gemäß einem weiteren Gesichtspunkt betrifft die Erfindung zudem ein Schwerlastfahrzeug mit wenigstens einer Achsbaugruppe nach einem der vorhergehenden Ansprüche. Hinsichtlich der Vorteile dieses Schwerlastfahrzeugs sei auf die vorstehende Diskussion der erfindungsgemäßen Achsbaugruppe verwiesen.

In Weiterbildung dieses Schwerlastfahrzeugs kann vorgesehen sein, dass es eine Zweikreis-Lenkanlage mit zwei zueinander redundanten Lenkkreisen umfasst und dass eine Steuervorrichtung der Zweikreis-Lenkanlage dazu ausgebildet und bestimmt ist, eine Ventilanordnung der Zweikreis-Lenkanlage derart anzusteuern, dass bei Rückwärtsfahrt des Schwerlastfahrzeugs lediglich einer der Lenkkreise mit Betriebsfluid versorgt wird. Bevorzugt kann dabei mal der eine Lenkkreis und mal der andere Lenkkreis mit Betriebsfluid versorgt werden. Durch diese Maßnahme(n) kann die Lebensdauer der Zweikreis-Lenkanlage verlängert werden, da bei Rückwärtsfahrt immer einer der beiden Lenkkreise geschont wird.

Die Erfindung wird im Folgenden anhand der beigefügten Zeichnung an einigen Ausführungsbeispielen näher erläutert werden. Es stellt dar:
- Figur 1: eine Seitenansicht eines Beispiels eines erfindungsgemäßen Schwerlastfahrzeugs, nämlich eines modular aufgebauten Schwerlast-Sattelanhängers;
- Figuren 2a bis 2d: Seitenansichten einer beispielhaften Ausführungsform einer erfindungsgemäßen Achsbaugruppe, nämlich einer Pendelachsen-Achsbaugruppe;
- Figuren 3a bis 3e: Draufsichten auf eine Ausführungsform einer erfindungsgemäßen Achsbaugruppe, bei welcher die verstellbare Einheit für den Rückwärtsfahrtbetrieb als aktive Lenckrafterzeugungseinheit ausgebildet ist;
- Figur 4: eine Draufsicht auf eine weitere Ausführungsform einer erfindungsgemäßen Achsbaugruppe, bei welcher die verstellbare Einheit für den Rückwärtsfahrtbetrieb jeweils als passive Lenkkrafteinleitungseinheit ausgebildet ist;
- Figur 5: eine Draufsicht auf eine weitere Ausführungsform einer erfindungsgemäßen Achsbaugruppe, bei welcher die verstellbare Einheit für den Rückwärtsfahrtbetrieb sowohl Merkmale einer aktiven Lenkkrafterzeugungseinheit als auch Merkmale einer passiven Lenkkrafteinleitungseinheit aufweist; und
- Figuren 6a und 6b: eine Draufsicht (Figur 6a) und eine Frontansicht (Figur 6b) einer weiteren Ausführungsform einer erfindungsgemäßen Achsbaugruppe, welche im Unterschied zu den anderen Ausführungsformen nicht als Pendelachsen-Achsbaugruppe ausgebildet ist, sondern als achsschenkelgelenkte Achsbaugruppe mit MacPherson-Einradaufhängung.

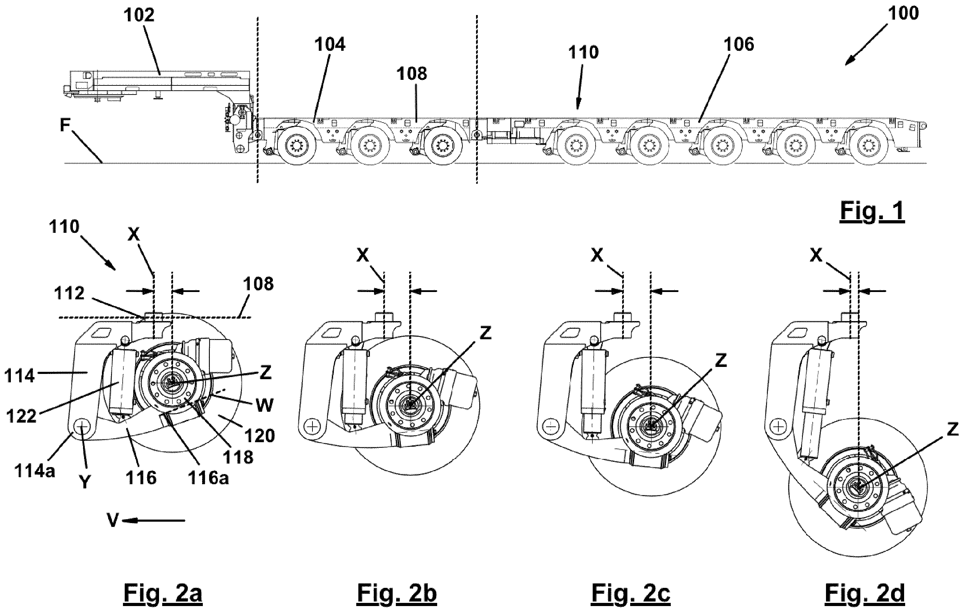

In Figur 1 ist ein erfindungsgemäßes Schwerlastfahrzeug ganz allgemein mit 100 bezeichnet. In dem dargestellten Ausführungsbeispiel ist das Schwerlastfahrzeug 100 als modular aufgebauter Sattelanhänger ausgebildet. Hierzu umfasst der Sattelanhänger 100 ein Schwanenhals-Modul 102, ein Vorlauffahrzeug-Modul 104 und ein Nachlauffahrzeug-Modul 106. Ferner kann beispielsweise zwischen dem Vorlauffahrzeug-Modul 104 und dem Nachlauffahrzeug-Modul 106 ein weiteres Modul angeordnet sein, beispielsweise eine Ladebrücke oder ein teleskopierbar ausgebildeter Mittellängsträger, der eine Anpassung der Länge des Sattelanhängers 100 an die Länge der jeweils zu transportierenden Last ermöglicht.

Der Sattelanhänger 100 verfügt über eine Mehrzahl von Achsbaugruppen 110, die in dem in Figur 1 dargestellten Ausführungsbeispiel als Pendelachsen-Achsbaugruppen ausgebildet sind. Bereits an dieser Stelle sei darauf hingewiesen, dass das Vorlauffahrzeug-Modul 104 und das Nachlauffahrzeug-Modul 106 auch eine andere Anzahl von Achsbaugruppen 110 aufweisen könnten, als dies in Figur 1 dargestellt ist.

Mit Bezug auf die Figur 2a umfasst die Pendelachsen-Achsbaugruppe 110 ein Drehlager 112 mit einer im Wesentlichen vertikal verlaufenden Lenkdrehachse X, ein mit dem Drehlager 112 fest verbundenes Drehgestell 114, an dessen freiem Ende 114a eine Schwinge 116 um eine im Wesentlichen horizontal verlaufende Schwenkachse Y schwenkbar angeordnet ist, und einen Radträger 118, der an dem freien Ende 116a der Schwinge 116 um eine Achse W schwenkbar angeordnet ist, wobei dem Radträger 118 zugeordnete Räder 120 an diesem um eine Raddrehachse Z drehbar gelagert sind. Ferner ist ein zwischen dem Drehgestell 114 und der Schwinge 116 wirkendes Zylinder-Kolben-Aggregat 122 vorgesehen, welches fluidisch, d.h. pneumatisch und/oder hydraulisch, verstellt werden kann, so dass die Räder 120 relativ zu dem in Figur 2a lediglich schematisch angedeuteten Rahmen 108 des Schwerlastfahrzeug 100 in unterschiedlichen Abständen angeordnet werden können (siehe Figuren 2a bis 2d), um Unebenheiten der Fahrbahn F ausgleichen zu können.

Wie in den Figuren 2a bis 2d dargestellt ist, ist die Pendelachsen-Achsbaugruppe 110 für den Vorwärtsfahrtbetrieb als reibungsgelenkte Achsbaugruppe ausgebildet. Hierzu ist die Achsbaugruppe 110 derart konstruiert, dass die Raddrehachse Z bei Geradeausfahrt (Lenkwinkel 0°) in Vorwärtsfahrtrichtung V unabhängig vom Schwenkzustand der Schwinge 116 um die Schwenkachse Y stets hinter der Lenkdrehachse X angeordnet ist. Auf diese Weise kann sich die Achsbaugruppe 110 bei Kurvenfahrt unter dem Einfluss der von der Fahrbahn F auf die Räder 120 ausgeübten Reibungskraft selbsttätig auf den jeweils optimalen Lenkwinkel einstellen. Es ist daher insbesondere nicht erforderlich, für den Vorwärtsfahrtbetrieb aktiv Lenkkräfte in die Achsbaugruppe 110 einzuleiten.

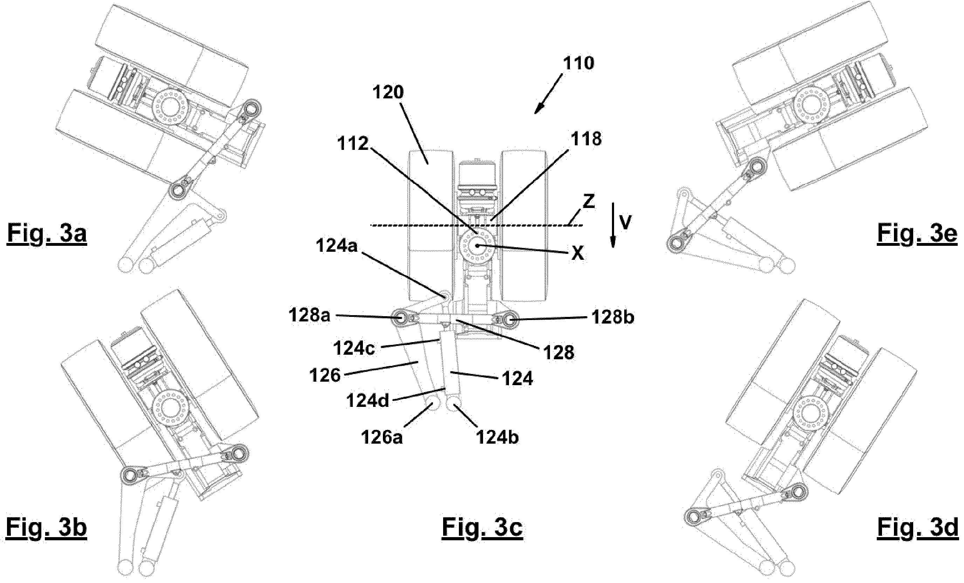

Da reibungsgelenkte Räder bei schneller Fahrt zum "Flattern" neigen, ist der Achsbaugruppe 110, wie in Figur 3c dargestellt ist, eine Dämpfungsvorrichtung 124 zugeordnet. In dem dargestellten Ausführungsbeispiel ist die Dämpfungsvorrichtung 124 als Zylinder-Kolben-Einheit ausgebildet, deren (nicht dargestellte) Arbeitsräume über eine Drossel miteinander verbunden sind, welche bei Bewegung des die Arbeitsräume voneinander trennenden Kolbens in dem Zylinder für eine das "Flattern" verhindernde Dämpfungskraft sorgt.

Wie in Figur 3c dargestellt ist, greift das freie Ende 124a der Zylinder-Kolben-Einheit 124 an einem Übersetzungshebel 126 an, an welchem das eine Ende 128a einer Lenkstange 128 drehbar angelenkt ist, deren anderes Ende 128b mit dem Drehlager 112 der Achsbaugruppe 110 drehbar verbunden ist. Wie man den Figuren 3a bis 3e entnimmt, können auf diese Weise durch Verstellen der Zylinder-Kolben-Einheit 124 zwischen ihrer maximal verkürzten Stellung (siehe Figur 3a) und ihrer maximal verlängerten Stellung (siehe Figur 3e) Lenkwinkel von -65° bis +65° ermöglicht werden.

Nachzutragen ist noch, dass sowohl der Übersetzungshebel 126 bei 126a als auch die Zylinder-Kolben-Einheit 124 bei 124b am Rahmen 108 des Schwerlastfahrzeugs 100 angelenkt sind.

Im Rückwärtsfahrtbetrieb kann die Zylinder-Kolben-Einheit 124 als Lenkkrafterzeugungseinheit betrieben werden, d.h. als Zylinder-Kolben-Aggregat, dem über die Anschlüsse 124c und 124d (siehe Figur 3a) gasförmiges und/oder flüssiges Betriebsfluid, d.h. beispielsweise Druckluft und/oder Hydrauliköl, zugeführt wird, um eine Lenkkraft zu erzeugen, welche die Achsbaugruppe 110 in die jeweils gewünschte Lenkdrehstellung um die Lenkdrehachse X überführt.

Die Zylinder-Kolben-Einheit 124 bildet somit eine erste Ausführungsform einer verstellbaren Einheit im Sinne der vorliegenden Erfindung.

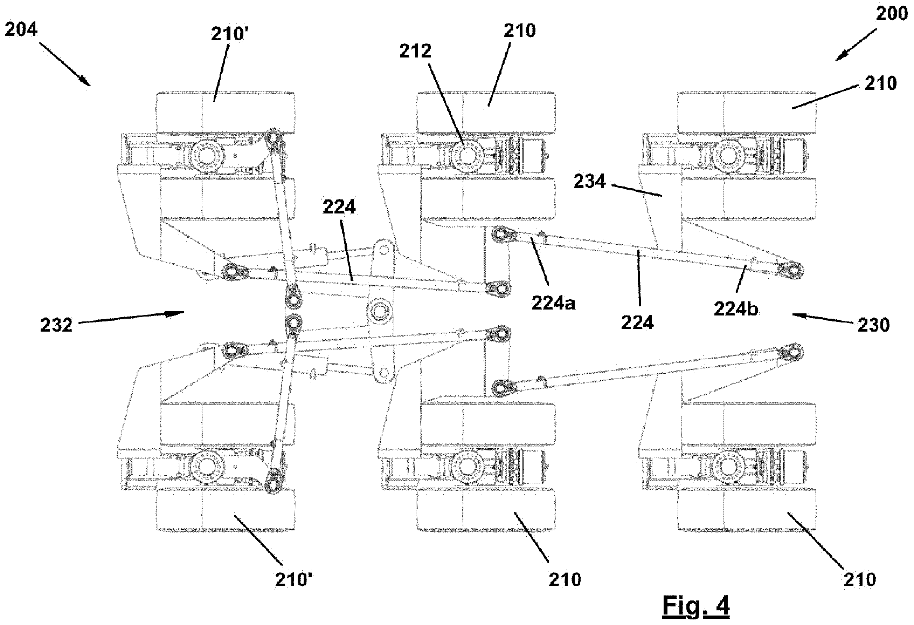

In Figur 4 ist eine weitere Ausführungsform eines erfindungsgemäßen Schwerlastfahrzeugs dargestellt, welches erfindungsgemäße Achsbaugruppen aufweist. Die Konstruktion der Ausführungsform der Figur 4 entspricht in weiten Zügen jener der Ausführungsform der Figuren 2a bis 2d und 3a bis 3e. Daher sind in Figur 4 analoge Teile mit den gleichen Bezugszeichen versehen wie in den Figuren 2a bis 2d und 3a bis 3e, jedoch vermehrt um die Zahl 100. Darüber hinaus wird die Ausführungsform der Figur 4 im Folgenden nur insoweit beschrieben werden, als sie sich von der Ausführungsform der Figuren 2a bis 2d und 3a bis 3e unterscheidet, auf deren Beschreibung hiermit ansonsten ausdrücklich verwiesen sei.

Bei den Schwerlastfahrzeug 200 der Figur 4 sind die verstellbaren Einheiten 224 der Achsbaugruppen 210 für den Rückwärtsfahrtbetrieb als starre Lenkstangen eines Lenkgestänges 230 ausgebildet, welches einen von einer Lenkkrafterzeugungseinheit 232 vorgegebenen Lenkwinkel gemäß einem vorbestimmten Übersetzungsverhältnis von Achsbaugruppe zu Achsbaugruppe weitergibt. Hierzu sind die Lenkstangen 224 an Lenkhebeln 234 angelenkt, welche betriebsfest mit den Drehgestellen 212 der Achsbaugruppen 210 verbunden sind.

Diese Art der Zwangslenkung ist die derzeit bei den Schwerlastfahrzeugen der Anmelderin am häufigsten eingesetzte Art der Lenkung für den Vorwärtsfahrtbetrieb. Erfindungsgemäß wird diese Art der Zwangslenkung aber lediglich für den Rückwärtsfahrtbetrieb eingesetzt. Für den Vorwärtsfahrtbetrieb wird wiederum die Reibungslenkung eingesetzt.

Hierzu sind die Lenkstangen 224 teleskopierbar ausgebildet, wobei die beiden die Lenkstange 224 bildenden Elemente 224a und 224b reibschlüssig miteinander zusammenwirken, um bei Relativbewegung die für das Verhindern des "Flatterns" erforderliche Dämpfungskraft bereitzustellen.

Nachzutragen ist noch, dass nicht alle Achsbaugruppen des in Figur 4 dargestellten Vorlauffahrzeug-Moduls 204 des Schwerlastfahrzeugs 200 als im Vorwärtsfahrtbetrieb reibungsgelenkte Achsbaugruppen 210 ausgebildet sind. Dies ist nämlich gemäß den einschlägigen Vorschriften nicht zulässig. Vielmehr fordern diese Vorschriften, dass zumindest die Hälfte der Achsbaugruppen des gesamten Schwerlastfahrzeugs 200 als zwangsgelenkte Achsbaugruppen ausgebildet sein muss. In der Ausführungsform gemäß Figur 4 sind daher zwei Achsbaugruppen 210' vorgesehen, welche auch im Vorwärtsfahrtbetrieb unter dem Einfluss der Lenkkrafterzeugungseinheit 232 zwangsgelenkt sind.

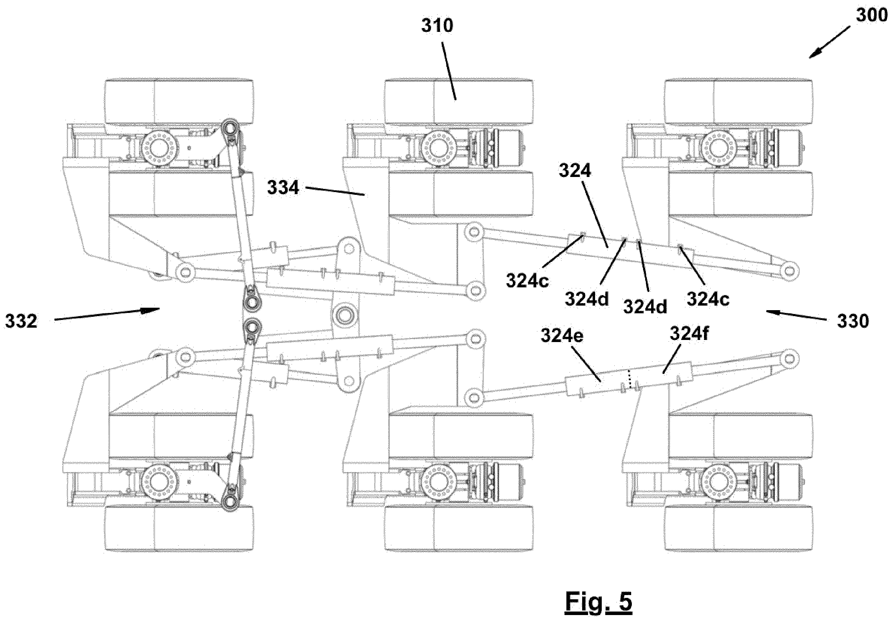

In Figur 5 ist eine weitere Ausführungsform eines erfindungsgemäßen Schwerlastfahrzeugs dargestellt, welches erfindungsgemäße Achsbaugruppen aufweist. Die Konstruktion der Ausführungsform der Figur 5 entspricht in weiten Zügen jener der Ausführungsform der Figur 4. Daher sind in Figur 5 analoge Teile mit den gleichen Bezugszeichen versehen wie in Figur 4, jedoch vermehrt um die Zahl 100, d.h. verglichen mit den Figuren 2a bis 2d und 3a bis 3e vermehrt um die Zahl 200. Darüber hinaus wird die Ausführungsform der Figur 5 im Folgenden nur insoweit beschrieben werden, als sie sich von den Ausführungsformen der Figuren 2a bis 2d und 3a bis 3e bzw. 4 unterscheidet, auf deren Beschreibung hiermit ansonsten ausdrücklich verwiesen sei.

Die verstellbaren Einheiten 324 der Achsbaugruppen 310 des Schwerlastfahrzeugs 300 kombinieren Merkmale der verstellbaren Einheiten 124 der Ausführungsform der Figuren 2a bis 2d und 3a bis 3e und der verstellbaren Einheiten 224 der Ausführungsform der Figur 4. Einerseits verbinden sie nach Art von Lenkstangen eines Lenkgestänges 330 die den Achsbaugruppen 310 zugeordneten Lenkhebel 334, sodass sie einen von einer Lenkkrafterzeugungseinheit 332 erzeugten Lenkwinkel gemäß einem vorgegebenen Übersetzungsverhältnis von Achsbaugruppe zu Achsbaugruppe weitergeben. Andererseits sind sie als Zylinder-Kolben-Aggregate ausgebildet, denen über Anschlüsse 324c und 324d Betriebsfluid zugeführt werden kann, sodass sie ihrerseits den Lenkwinkel der ihr zugeordneten Achsbaugruppe 310 aktiv beeinflussen können, beispielsweise um einen Korrekturlenkwinkel zu erzeugen, um das "Radieren" der Räder auf der Fahrbahn zu verhindern.

Es ist jedoch auch möglich, die Zuführung von Betriebsfluid über die Anschlüsse 324c und 324d im zwangsgelenkten Rückwärtsfahrtbetrieb lediglich dazu zu nutzen, um die verstellbaren Einheiten 324 auf eine feste mittlere Länge einzustellen. Da Zylinder-Kolben-Einheiten am einfachsten in einer Extremstellung festzulegen sind, d.h. der vollständig verkürzten Stellung oder der vollständig verlängerten Stellung, sind die verstellbaren Einheiten 324 bei der Ausführungsform gemäß Figur 5 als Doppelzylinder ausgebildet, d.h. sie umfassen zwei Zylinder-Kolben-Einheiten 324e und 324f, die mit ihren den jeweiligen Austrittsenden der Kolbenstangen entgegengesetzten Enden betriebsfest miteinander verbunden sind. Zur Einstellung der verstellbaren Einheiten 324 auf eine mittlere Länge wird die eine Zylinder-Kolben-Einheit 324e in die vollständig verkürzte Stellung übergeführt, während die andere Zylinder-Kolben-Einheit 324f in die vollständig verlängerte Stellung übergeführt wird.

Unabhängig davon, wie die verstellbaren Einheiten 324 im Zusammenhang mit der Zwangslenkung im Rückwärtsfahrtbetrieb betrieben werden, wirken sie im reibungsgelenkten Vorwärtsfahrtbetrieb als Dämpfungseinrichtungen zur Verhinderung des "Flatterns".

Nachzutragen ist noch, dass bei allen Ausführungsformen auch die im Vorwärtsfahrtbetrieb zwangsgelenkten Achsbaugruppen den gleichen grundlegenden konstruktiven Aufbau aufweisen wie die im Vorwärtsfahrtbetrieb reibungsgelenkten Achsbaugruppen, d.h. insbesondere ist auch bei den auch im Vorwärtsfahrtbetrieb zwangsgelenkten Achsbaugruppen die Raddrehachse Z in jedem Einfederungszustand der Schwinge bezogen auf die Vorwärtsfahrtrichtung V stets hinter der Lenkdrehachse X angeordnet.

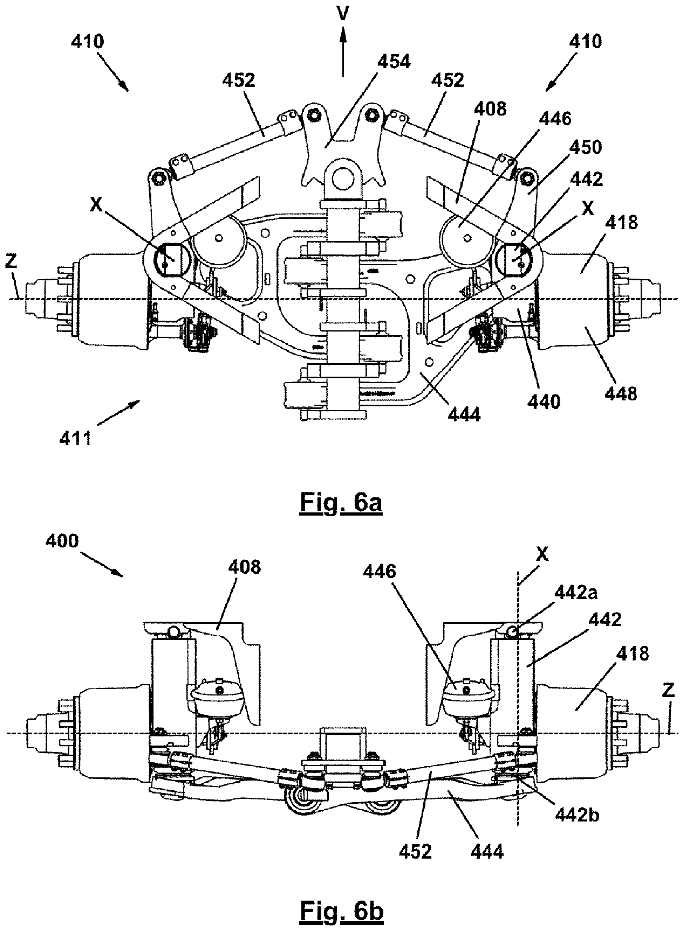

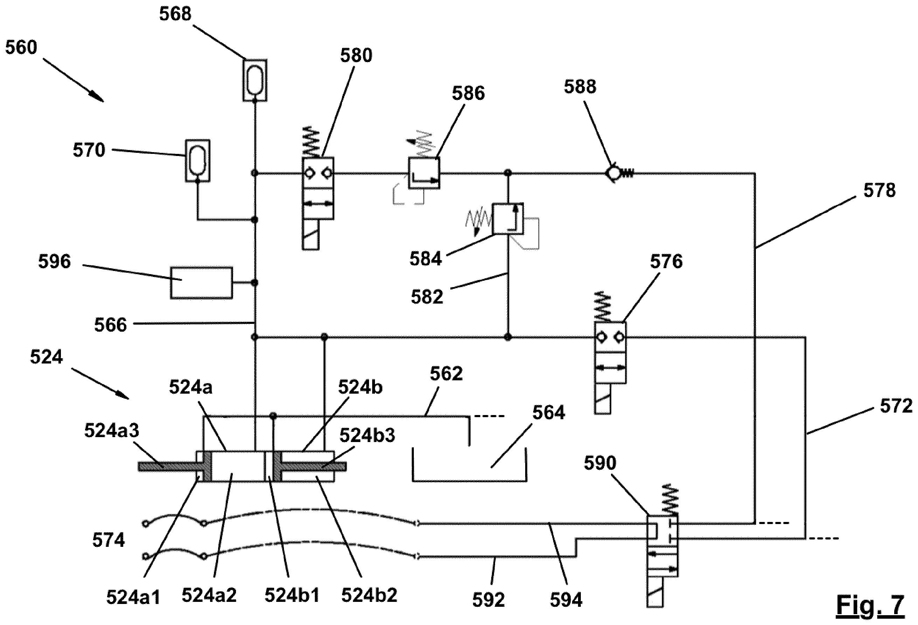

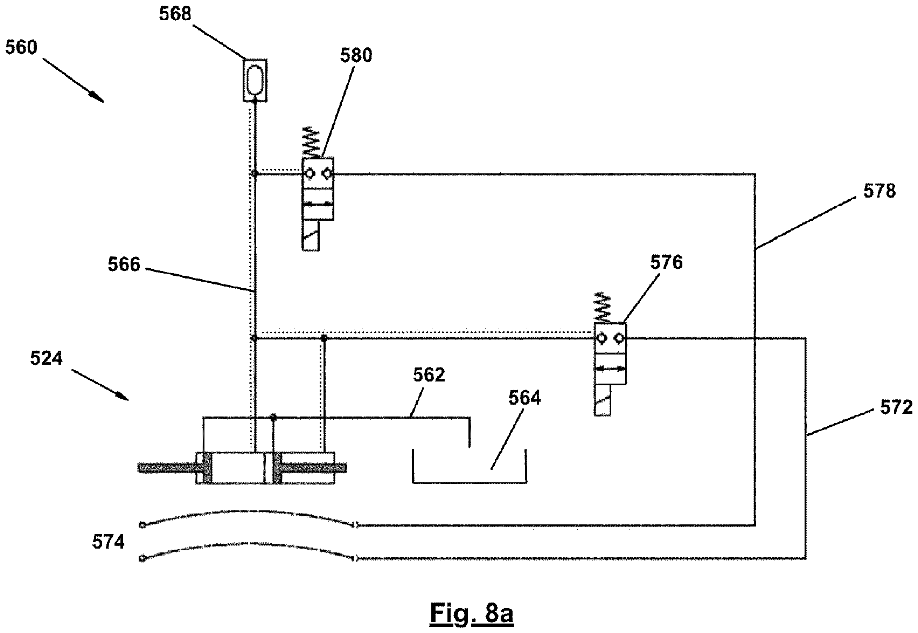

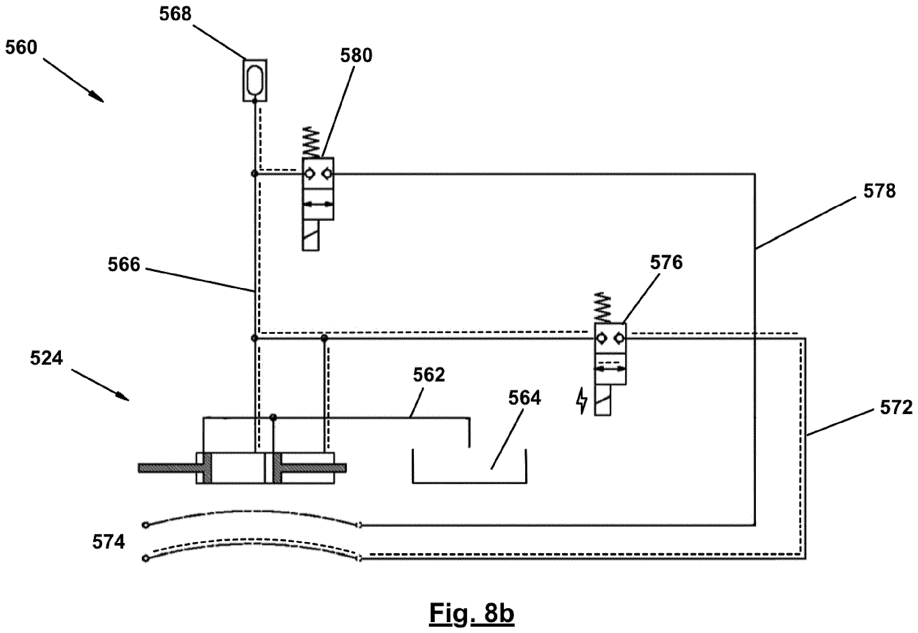

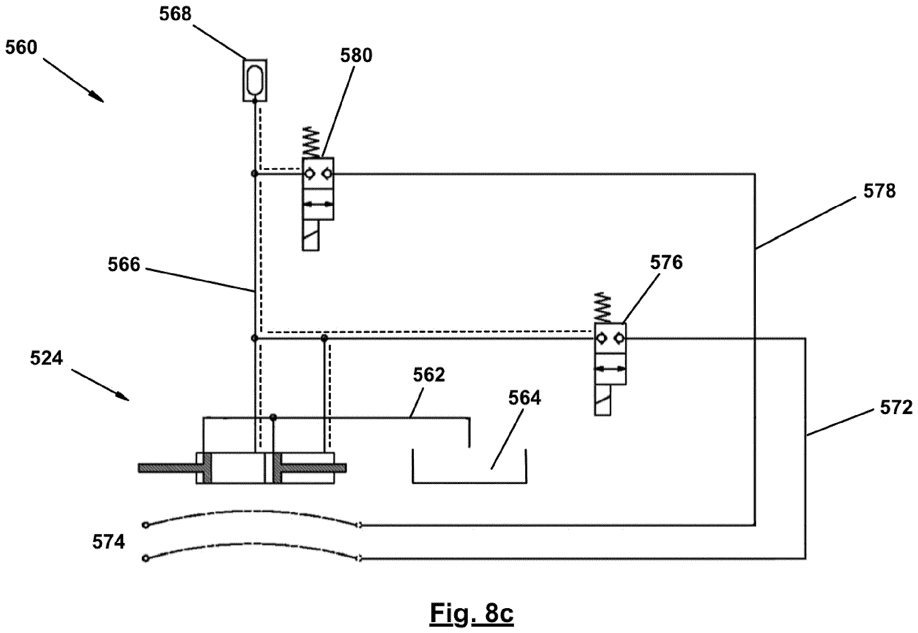

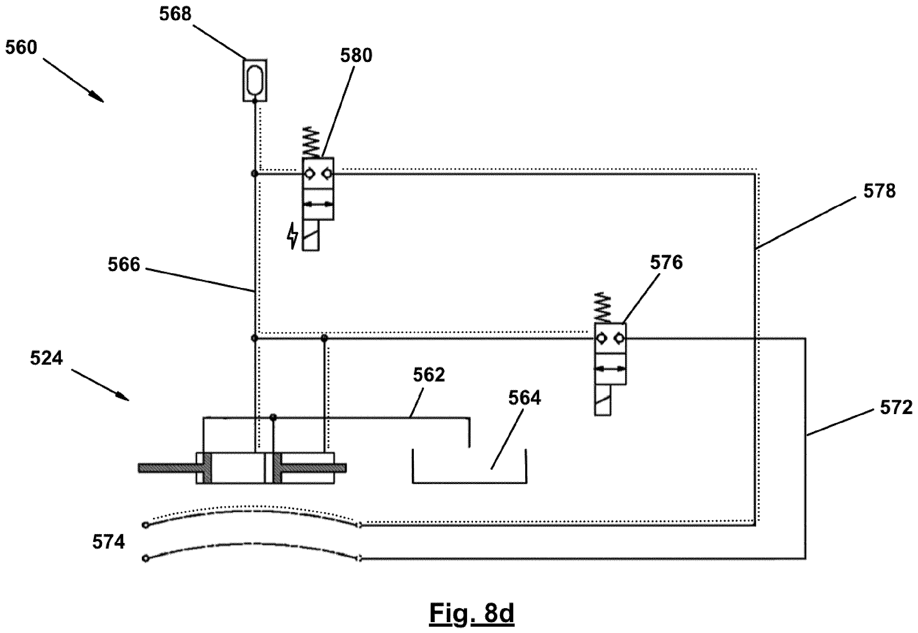

An dieser Stelle sei darauf hingewiesen, dass bei allen vorstehend beschriebenen Ausführungsformen sogenannte Pendelachsen-Achsbaugruppen zum Einsatz gekommen sind. Dies bedeutet jedoch nicht, dass die erfindungsgemäße Lösung auf diesen Typ von Achsbaugruppe beschränkt ist. Vielmehr kann sie bei jedem beliebigen Konstruktionsprinzip von Achsbaugruppen mit Vorteil eingesetzt werden, beispielsweise auch bei achsschenkelgelenkten Achsbaugruppen. Dies soll nachstehend mit Bezug auf die Figuren 6a und 6b näher erläutert werden, welche eine reibungsgelenkte Achsbaugruppe mit MacPherson-Einzelradaufhängung zeigt. Dabei sind in Figur 5 analoge Teile mit den gleichen Bezugszeichen versehen wie in den Figuren 2a bis 2d und 3a bis 3e, jedoch vermehrt um die Zahl 300. Darüber hinaus wird die Ausführungsform der Figuren 6a und 6b im Folgenden nur insoweit beschrieben werden, als sie sich von den Ausführungsformen der Figuren 2a bis 2d und 3a bis 3e, 4 und 5 unterscheidet, auf deren Beschreibung hiermit ansonsten ausdrücklich verwiesen sei.

Der grundlegende Aufbau der MacPherson-Einzelradaufhängung ist in der DE 10 2012 205 641 A1 der Anmelderin im Detail erläutert, auf deren Beschreibung hiermit ausdrücklich Bezug genommen wird und die diesbezüglich zum Teil der Offenbarung der vorliegenden Anmeldung gemacht wird.

Gemäß den Figuren 6a und 6b umfasst jede der Achsbaugruppen 410 einen Radträger 418, der über eine Montagebaugruppe 440 mit einem Zylinder-Kolben-Aggregat 442 verbunden ist. Das Zylinder-Kolben-Aggregat 442 ist mit seinem oberen Ende 442a unmittelbar am Rahmen 408 des Schwerlastfahrzeugs 400 angelenkt, während es mit seinem unteren Ende 442b über die Montagebaugruppe 440 und Dreiecksquerlenker 444 mittelbar am Rahmen 408 angelenkt ist. Ferner umfassen die Achsbaugruppen 410 noch einen Bremszylinder 446, der mit einer Bremseinrichtung 448 verbunden ist, die in dem Radträger 418 aufgenommen ist.

Darüber hinaus ist die Montagebaugruppe 440 mit einem Lenkhebel 450 ausgebildet, welcher über einen Querlenker 452 mit einer Lenkeinrichtung des Schwerlastfahrzeugs 400 verbunden ist. Bei Betätigung der Lenkeinrichtung, d.h. Verschwenken der Lenkplatte 454, wird die Montagebaugruppe 440 um die Lenkdrehachse X gedreht, die mit der Achse des Zylinder-Kolben-Aggregats 442 zusammenfällt. Wie man in Figur 6a erkennt, ist die Lenkdrehachse X auch bei der Ausführungsform der Figuren 6a und 6b bei Geradeausfahrt in Vorwärtsfahrtrichtung V vor der Raddrehachse Z angeordnet, wie es für die Verwirklichung der Reibungslenkung erforderlich ist. Dabei ist wichtig, dass sich etwaige unerwünschte Lenkmomente, die durch die Reibungslenkung der beiden Achsbaugruppen 410 zusätzlich erzeugt werden, gegenseitig aufheben, da sich die Querlenker 452 der ein und derselben Achslinie 411 angehörenden Achsbaugruppen 410 an einer gemeinsamen Lenkplatte 454 abstützen.

## Patentansprüche

1. Achsbaugruppe (110), welche dazu ausgebildet und bestimmt ist, bei einem Schwerlastfahrzeug (100) eingesetzt zu werden, die Achsbaugruppe (110) umfassend:
• ein Drehlager (112), mit einer im Wesentlichen vertikal verlaufenden Lenkdrehachse (X),
• einen um die Lenkdrehachse (X) drehbar angeordneten Radträger (118) mit wenigstens einem daran um eine Raddrehachse (Z) drehbar gelagerten Rad (120), wobei die Raddrehachse (Z) im Wesentlichen horizontal und bei Geradeausfahrt quer zur Fahrtrichtung (V) verläuft, und wobei die Raddrehachse (Z) bei Geradeausfahrt in jedem Einfederungszustand der Achsbaugruppe (110) in Fahrtrichtung (V) hinter der Lenkdrehachse (X) angeordnet ist, und
• eine bei Drehung des Radträgers (118) um die Lenkdrehachse (X) verstellbare Einheit (124),
**dadurch gekennzeichnet, dass**
die verstellbare Einheit (124) zwischen zwei Betriebszuständen verstellbar ist, nämlich einem Vorwärtsfahrt-Betriebszustand, in welchem sie die Drehbewegung des Radträgers (118) um die Lenkdrehachse (X) beeinflusst, und einem Rückwärtsfahrt-Betriebszustand, in welchem sie eine die Achsbaugruppe (110) lenkende Lenkkraft derart in die Achsbaugruppe (110) einleitet, dass die Achsbaugruppe (110) als zwangsgelenkte Achsbaugruppe betrieben wird.

2. Achsbaugruppe nach Anspruch 1,
**dadurch gekennzeichnet, dass** die verstellbare Einheit (224) zwei oder mehr relativ zueinander verstellbare Elemente (224a, 224b) umfasst, wobei wenigstens zwei dieser verstellbaren Elemente (224a, 224b) reibschlüssig aneinander anliegen.

3. Achsbaugruppe nach Anspruch 1 oder 2,
**dadurch gekennzeichnet, dass** die verstellbare Einheit (124; 324) eine Zylinder-Kolben-Anordnung mit einer Drossel aufweist.

4. Achsbaugruppe nach Anspruch 2 oder 3,
**dadurch gekennzeichnet, dass** die relativ zueinander verstellbaren Elemente der verstellbaren Einheit (224; 324) in dem Rückwärtsfahrt-Betriebszustand zu einer in sich starren Einheit verbunden sind.

5. Achsbaugruppe nach Anspruch 4,
**dadurch gekennzeichnet, dass** die verstellbare Einheit (124; 324) als Zylinder-Kolben-Anordnung ausgebildet ist, die vorzugsweise zwei Zylinder-Kolben-Einheiten (324e; 324f) umfasst, deren dem jeweiligen Kolbenstangenaustrittsende entgegengesetzte Enden betriebsfest miteinander verbunden sind.

6. Achsbaugruppe nach einem der Ansprüche 1 bis 3,
**dadurch gekennzeichnet, dass** die verstellbare Einheit (124; 324) als Lenkkrafterzeugungseinheit ausgebildet ist.

7. Achsbaugruppe nach Anspruch 6,
**dadurch gekennzeichnet, dass** die Lenkkrafterzeugungseinheit als Zylinder-Kolben-Aggregat ausgebildet ist, d.h. als Zylinder-Kolben-Anordnung, der, beispielsweise von einer Fluidpumpe, aktiv Betriebsfluid zugeführt wird.

8. Achsbaugruppe nach Anspruch 6 oder 7,
**dadurch gekennzeichnet, dass** die Lenkkrafterzeugungseinheit einkreisig ausgelegt ist.

9. Achsbaugruppe nach einem der Ansprüche 6 bis 8,
**dadurch gekennzeichnet, dass** das freie Ende der verstellbaren Einheit (124) dazu ausgebildet ist, am Rahmen (108) des Schwerlastfahrzeugs (100) befestigt zu werden.

10. Achsbaugruppe nach einem der Ansprüche 6 bis 8,
**dadurch gekennzeichnet, dass** das freie Ende der verstellbaren Einheit (224; 324) dazu ausgebildet ist, mit einer benachbarten Achsbaugruppe (210; 310) verbunden zu werden.

11. Achsbaugruppe nach einem der Ansprüche 1 bis 10,
**dadurch gekennzeichnet, dass** die verstellbare Einheit (124) in Vorwärtsfahrtrichtung (V) vor der Lenkdrehachse (X) angeordnet ist.

12. Achsbaugruppe nach einem der Ansprüche 1 bis 11,
**dadurch gekennzeichnet, dass** das freie Ende der verstellbaren Einheit (124) an einem Übersetzungshebel (126) angreift, an welchem das eine Ende einer Lenkstange (128) angelenkt ist, deren anderes Ende mit dem Drehlager (112) verbunden ist.

13. Schwerlastfahrzeug (100) mit wenigstens einer Achsbaugruppe (110) nach einem der vorhergehenden Ansprüche.

## Claims

1. Axle assembly (110) which is designed and intended to be used in a heavy goods vehicle (100), the axle assembly (110) comprising:
• a pivot bearing (112) having a substantially vertically extending steering rotational axis (X),
• a wheel support (118) that is arranged so as to be rotatable about the steering rotational axis (X) and comprises at least one wheel (120) that is mounted thereon so as to be rotatable about the wheel rotational axis (Z), the wheel rotational axis (Z) extending substantially horizontally and, in the case of straight travel, transversely to the travel direction (V), and the wheel rotational axis (Z) being arranged behind the steering rotational axis (X), in the travel direction (V), in every deflection state of the axle assembly (110), during straight travel, and
• a unit (124) that is adjustable about the steering rotational axis (X) when the wheel support (118) is rotated,
**characterised in that**
the adjustable unit (124) being adjustable between two operating states, specifically a forwards travel operating state in which it influences the rotational movement of the wheel support (118) about the steering rotational axis (X), and a reverse travel operating state in which it introduces a steering force, which steers the axle assembly (110), into the axle assembly (110) such that the axle assembly (110) is operated as a positively steered axle assembly.

2. Axle assembly according to claim 1,
**characterised in that** the adjustable unit (224) comprises two or more elements (224a, 224b) that are adjustable relative to one another, at least two of said adjustable elements (224a, 224b) being in frictional contact with one another.

3. Axle assembly according to claim 1 or 2,
**characterised in that** the adjustable unit (124; 324) comprises a cylinder-piston arrangement having a throttle.

4. Axle assembly according to claim 2 or 3,
**characterised in that** the mutually adjustable elements of the adjustable unit (224; 324) are connected to form an intrinsically rigid unit in the reverse travel operating state.

5. Axle assembly according to claim 4,
**characterised in that** the adjustable unit (124; 324) is designed as a cylinder-piston arrangement which preferably comprises two cylinder-piston units (324e; 324f), the ends of which that are opposite the respective piston rod outlet end are interconnected in an operationally fixed manner.

6. Axle assembly according to any of claims 1 to 3,
**characterised in that** the adjustable unit (124; 324) is designed as a steering force generation unit.

7. Axle assembly according to claim 6,
**characterised in that** the steering force generation unit is designed as a cylinder-piston assembly, i.e. as a cylinder-piston arrangement which is actively supplied with operating fluid, for example by a fluid pump.

8. Axle assembly according to claim 6 or 7,
**characterised in that** the steering force generation unit is designed having a single circuit.

9. Axle assembly according to any of claims 6 to 8,
**characterised in that** the free end of the adjustable unit (124) is designed to be fastened to the frame (108) of the heavy goods vehicle (100).

10. Axle assembly according to any of claims 6 to 8,
**characterised in that** the free end of the adjustable unit (224; 324) is designed to be connected to an adjacent axle assembly (210; 310).

11. Axle assembly according to any of claims 1 to 10,
**characterised in that** the adjustable unit (124) is arranged in front of the steering rotational axis (X), in the forward travel direction (V).

12. Axle assembly according to any of claims 1 to 11,
**characterised in that** the free end of the adjustable unit (124) engages on a transmission lever (126), to which one end of a steering rod (128) is hinged, the other end of which steering rod is connected to the pivot bearing (112).

13. Heavy goods vehicle (100) comprising at least one axle assembly (110) according to any of the preceding claims.

## Revendications

1. Ensemble d'essieu (110) adapté et destiné à être utilisé sur un véhicule poids lourd (100), l'ensemble d'essieu (110) comprenant :
• un palier de rotation (112), ayant un axe de rotation de direction (X) s'étendant sensiblement verticalement,
• un support de roue (118) disposé de manière rotative autour de l'axe de rotation de direction (X) et ayant au moins une roue (120) montée de manière rotative sur celui-ci autour d'un axe de rotation de roue (Z), dans lequel l'axe de rotation de roue (Z) s'étend sensiblement horizontalement et transversalement à la direction de déplacement (V) pendant un déplacement en ligne droite, et dans lequel l'axe de rotation de roue (Z) est disposé derrière l'axe de rotation de direction (X) dans la direction de déplacement (V) pendant un déplacement en ligne droite dans n'importe quel état de déflexion de l'ensemble d'essieu (110), et
• une unité déplaçable (124) lors de la rotation du support de roue (118) autour de l'axe de rotation de direction (X),
**caractérisé en ce que**
l'unité déplaçable (124) est déplaçable entre deux états de fonctionnement, à savoir un état de fonctionnement de conduite en avant dans lequel il influence le mouvement de rotation du support de roue (118) autour de l'axe de rotation de direction (X), et un état de fonctionnement en marche arrière dans lequel il introduit une force dirigeant l'ensemble d'essieu (110) dans l'ensemble d'essieu (110) de telle sorte que l'ensemble d'essieu (110) est opéré en tant qu'ensemble d'essieu à guidage forcé.

2. Ensemble d'essieu selon la revendication 1,
**caractérisé en ce que** ladite unité réglable (224) comprend deux ou plusieurs éléments (224a, 224b) réglables l'un par rapport à l'autre, au moins deux desdits éléments réglables (224a, 224b) s'engageant par friction l'un avec l'autre.

3. Ensemble d'essieu selon la revendication 1 ou 2,
**caractérisé en ce que** l'unité réglable (124 ; 324) comprend un agencement cylindre-piston avec un étranglement.

4. Ensemble d'essieu selon la revendication 2 ou 3,
**caractérisé en ce que** les éléments de l'unité réglable (224 ; 324) qui sont réglables les uns par rapport aux autres sont reliés pour former une unité intrinsèquement rigide dans l'état de fonctionnement en marche arrière.

5. Ensemble d'essieu selon la revendication 4,
**caractérisé en ce que** l'unité réglable (124 ; 324) est adaptée comme un agencement cylindre-piston qui comprend de préférence deux unités cylindre-piston (324e ; 324f) dont les extrémités opposées à l'extrémité de sortie de tige de piston respective sont reliées l'une à l'autre de manière fixe en termes de fonctionnement.

6. Ensemble d'essieux selon l'une des revendications 1 à 3,
**caractérisé en ce que** l'unité réglable (124 ; 324) est adaptée comme une unité de génération de force de direction.

7. Ensemble d'essieu selon la revendication 6,
**caractérisé en ce que** l'unité de génération de force de direction est adaptée comme un ensemble cylindre-piston, c'est-à-dire comme un agencement cylindre-piston auquel du fluide de fonctionnement est activement fourni, par exemple par une pompe à fluide.

8. Ensemble d'essieu selon la revendication 6 ou 7,
**caractérisé en ce que** l'unité de génération de force de direction est de conception à circuit unique.

9. Ensemble d'essieu selon l'une des revendications 6 à 8,
**caractérisé en ce que** l'extrémité libre de l'unité réglable (124) est adaptée pour être fixée au châssis (108) du véhicule poids lourd (100).

10. Ensemble d'essieu selon l'une des revendications 6 à 8,
**caractérisé en ce que** l'extrémité libre de l'unité réglable (224 ; 324) est adaptée pour être connectée à un ensemble d'essieu adjacent (210 ; 310).

11. Ensemble d'essieux selon l'une des revendications 1 à 10,
**caractérisé en ce que** l'unité réglable (124) est disposée devant l'axe de rotation de direction (X) dans la direction de la marche avant (V).

12. Ensemble d'essieu selon l'une des revendications 1 à 11,
**caractérisé en ce que** l'extrémité libre de l'unité réglable (124) engage un levier de transmission (126) auquel est articulée une extrémité d'une barre de direction (128) dont l'autre extrémité est reliée au palier de rotation (112).

13. Véhicule poids lourd (100) comprenant au moins un ensemble d'essieux (110) selon l'une des revendications précédentes.
